# EUROPÄISCHE PATENTSCHRIFT

(11) **EP 2 751 005 B1**
(45) Veröffentlichungstag und Bekanntmachung des Hinweises auf die Patenterteilung: **18.03.2015**
(21) Anmeldenummer: 12756430.0
(22) Anmeldetag: 31.08.2012
(51) Int. Cl.: B66B 5/18, F16D 55/224, F16D 63/00

(54) **REIBUNGSBREMSE MIT EINER SENKRECHT ZUR ZUSPANNRICHTUNG WIRKENDEN AKTOREINHEIT**
FRICTION BRAKE HAVING AN ACTUATOR UNIT THAT ACTS PERPENDICULARLY TO THE BRAKE APPLICATION DIRECTION
FREIN À FRICTION DOTÉ D'UNE UNITÉ ACTIONNEUR AGISSANT PERPENDICULAIREMENT À LA DIRECTION D'APPLICATION DU FREIN

(30) Priorität: 31.08.2011 DE 102011053178
(43) Veröffentlichungstag der Anmeldung: 09.07.2014
(73) Patentinhaber: gomtec GmbH, 82229 Seefeld (DE)
(72) Erfinder: SCHAUTT, Martin, 80636 München (DE); RIES, Michael, 82140 Olching (DE)
(74) Vertreter: Keilitz, Wolfgang
(86) Internationale Anmeldenummer: PCT/EP2012/066974
(87) Internationale Veröffentlichungsnummer: WO 2013/030347

(56) Entgegenhaltungen:
- CH-A5- 684 190
- DE-A1- 2 838 423
- DE-A1-102005 053 835

## Beschreibung

Die Erfindung betrifft eine Reibungsbremse gemäß dem Oberbegriff des Patentanspruchs 1 und insbesondere eine elektromechanische Reibungsbremse für Aufzüge.

Aus dem Stand der Technik bekannte Reibungsbremsen, welche in der Bauart einer Bremszange ausgebildet sind, wie sie z.B. auch zum Bremsen von Aufzügen verwendet werden können, umfassen zwei gegenüberliegend angeordnete Bremshebel, die mittels eines Aktors, wie z.B. eines Elektromotors, gegen ein dazwischen liegendes Element, wie z.B. eine Bremsschiene, gedrückt werden. Die Aktoren solcher Reibungsbremsen sind häufig nach dem Prinzip eines Ankerzugs aufgebaut. Der Elektromotor ist dabei üblicherweise an einem der Bremshebel befestigt. Zum Betätigen der Bremse treibt der Elektromotor eine Spindel an, die am anderen Bremshebel drehbar gelagert ist.

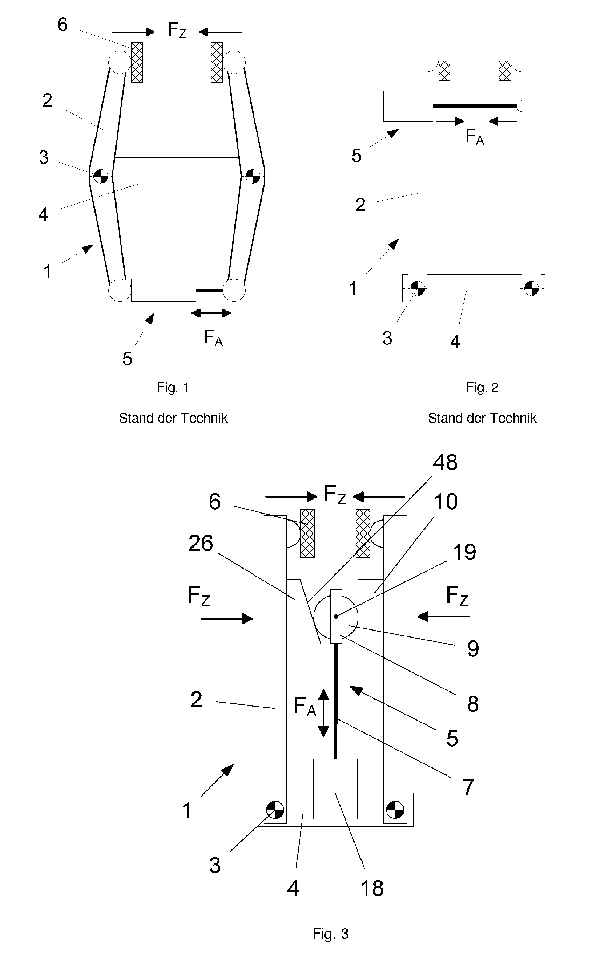

Figur 1 zeigt eine aus dem Stand der Technik bekannte Reibungsbremse 1 mit zwei gegenüberliegend angeordneten Bremshebeln 2, die jeweils mittig gelagert sind. An einem Ende der Bremshebel 2 ist jeweils ein Bremsbelag 6 vorgesehen. Am anderen Ende der Bremshebel 2 ist ein Aktor 5 - im vorliegenden Fall ein Elektromotor - angeordnet, mittels dessen die Hebelenden voneinander weg oder aufeinander zu bewegt werden können. Die Wirkrichtung des Aktors 5 ist dabei mit F_{A} bezeichnet. Die vom Aktor 5 ausgeübte Kraft wird jeweils über ein Lager 3 umgelenkt, so dass sich die Bremsbeläge 6 in Richtung der Zuspannkraft F_{Z} aufeinander zu oder voneinander weg bewegen. Wie zu erkennen ist, verlaufen die Wirkrichtung (Kraft F_{A}) des Aktors 5 und die Zuspannkraft F_{Z} in die gleiche Richtung.

Figur 2 zeigt eine andere aus dem Stand der Technik bekannte Reibungsbremse mit zwei Bremshebeln 2, die jeweils an einem Ende gelenkig gelagert sind. Am anderen, freien Ende der Bremshebel 2 ist jeweils ein Bremsbelag 6 vorgesehen. Die Bremshebel 2 sind hier in Form einer Bremszange gegenüberliegend angeordnet, die ein dazwischenliegendes Element (nicht gezeigt), wie z. B. eine Schiene, umgreift. Die dargestellte Reibungsbremse wird von einem Aktor 5 betätigt, der als Ankerzug realisiert ist. Der Ankerzug umfasst in diesem Fall einen Elektromotor mit einer Spindeleinheit 7, wobei der Elektromotor an einem der Bremshebel 2 und die Spindeleinheit 7 am anderen Bremshebel 2 befestigt ist. Durch Betätigung des Elektromotors kann die Bremse in Richtung der Zuspannkraft F_{Z} entweder zugespannt oder gelöst werden. Die Wirkrichtung des Aktors 5 ist wiederum mit F_{A} bezeichnet. Auch hier verlaufen die Wirkrichtung F_{A} des Aktors 5 und die Zuspannkraft F_{Z} in die gleiche Richtung.

Bei den vorstehend beschriebenen Reibungsbremsen ist der Aktor 5 jeweils seitlich an einem der Bremshebel 2 montiert. Aufgrund der relativ hohen Gewichtskraft des Aktors 5 wird die Bremse bzw. deren Aufhängung einseitig belastet. Dadurch wird einerseits ein unerwünschtes Trägheitsmoment erzeugt, das die Bremswirkung der Bremse 1 negativ beeinflussen kann. Andererseits übt die Gewichtskraft des Aktors 5 ein Moment auf den Bremshebel aus, das den Bremshebel 2 geringfügig tordiert oder krümmt, was dazu führt, dass die Bremsbeläge nicht mehr plan am Bremselement, wie z.B. einer Führungsschiene, anliegen. Auch dadurch können das Bremsverhalten sowie die Bremsleistung negativ beeinflusst werden.

Aus der EP 1 067 084 A1 ist eine Reibungsbremse mit wenigstens zwei schwenkbar gelagerten Bremshebeln bekannt, die jeweils einen Bremsbelag aufweisen und in Form einer Bremszange gegenüberliegend angeordnet sind. Die Reibungsbremse umfasst einen Hubmechanismus zum Betätigen der Bremshebel, der derart ausgelegt ist, dass die vom Aktor ausgeübte Kraft im Wesentlichen senkrecht zu einer von den Bremshebeln ausgeübten Zuspannkraft wirkt, und ferner einen Spreizmechanismus, der von dem Aktor betätigt werden kann, um die Zuspannkraft zu regulieren. Eine nach dem gleichen Prinzip aufgebaute Reibungsbremse ist auch aus der DE 10 2005 053 835 A1, der CH 684 190 A5 oder der DE 1 249 606 B bekannt. Weitere Reibungsbremsen verschiedener Ausführungen sind in den Druckschriften DE 31 23 640 A1 und der DE 29 10 118 A1 offenbart.

Es ist daher die Aufgabe der vorliegenden Erfindung, eine Reibungsbremse, insbesondere für Aufzüge, zu schaffen, die ein besseres Bremsverhalten und eine möglichst gleichmäßige Bremsleistung aufweist.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

Gemäß der Erfindung wird eine Reibungsbremse, insbesondere für Aufzüge, vorgeschlagen, die wenigstens zwei Bremshebel umfasst, die jeweils einen Bremsbelag aufweisen und in Form einer Bremszange gegenüberliegend angeordnet sind, wobei wenigstens ein Bremshebel schwenkbar gelagert ist. Der Aktor der erfindungsgemäßen Reibungsbremse ist dabei derart ausgelegt, dass die vom Aktor ausgeübte Kraft im Wesentlichen senkrecht zu einer von den Bremshebeln ausgeübten Zuspannkraft wirkt. Außerdem umfasst die erfindungsgemäße Reibungsbremse einen Spreizmechanismus mit einer vom Aktor betätigten Rolleneinheit mit einer ersten Rolle, die auf einer am ersten Bremshebel vorgesehenen ersten Fläche abrollt, und einer zweiten Rolle, die auf einer am zweiten Bremshebel vorgesehenen zweiten Fläche abrollt, wobei sich die Rollen um dieselbe Achse drehen. Mit einer solchen Konstruktion können sowohl die Bremsleistung verbessert als auch eine sehr gleichmäßige Bremswirkung mit geringem Verschleiß erreicht werden.

Gemäß einer bevorzugten Ausführungsform der Erfindung ist der Aktor nicht an einem der Bremshebel, sondern an einem Trägerelement der Bremszange, an dem z. B. auch die Bremshebel gelagert sind, oder einem beliebigen anderen Träger montiert. Im Falle einer Aufzugsbremse kann der Aktor beispielsweise an einem Rahmenteil des Aufzugs befestigt sein.

Der Aktor erstreckt sich vorzugsweise zumindest teilweise in einem Bereich zwischen den beiden gegenüberliegenden Bremshebeln. Die Wirkrichtung des Aktors verläuft dabei vorzugsweise in Längsrichtung der Bremshebel, d.h. vom Lager zum Bremsbelag.

Der erfindungsgemäße Spreizmechanismus umfasst vorzugsweise eine Rolleneinheit, die auf wenigstens einer Keilfläche abrollt. Die Rolleneinheit wird vorzugsweise vom Aktor in dessen Wirkrichtung angetrieben.

Der Spreizmechanismus ist vorzugsweise zwischen den Bremshebeln angeordnet. Gemäß einer ersten Ausführungsform kann der Spreizmechanismus beispielsweise ein Keilelement, das an einem der Bremshebel vorgesehen ist, und eine plane Auflagefläche umfassen, die am anderen Bremshebel vorgesehen ist. Wahlweise kann auch an jedem Bremshebel ein Keilelement vorgesehen sein. Die Keilflächen der Keilelemente sind vorzugsweise identisch.

Eine Keilfläche kann entweder eine gleichmäßige Steigung oder unterschiedliche Steigungen aufweisen. Die Keilfläche kann z. B. in einem ersten Bereich, auf dem die Rolleneinheit abrollt, wenn die Bremsbeläge noch nicht am Bremselement anliegen, eine größere Steigung aufweisen als in einem zweiten Bereich, auf dem die Rolleneinheit abrollt, wenn die Bremsbeläge gegen das Bremselement drücken. Das Zuspannverhalten der Bremse kann prinzipiell über die Auslegung der Keilfläche und/oder über die Steuerung des Aktors beeinflusst werden. Der Aktor könnte beispielsweise in einer bestimmten Phase eines Bremsvorgangs schneller betrieben werden als in einer anderen Phase des Bremsvorgangs.

Das wenigstens eine Keilelement des Spreizmechanismus ist vorzugsweise am zugehörigen Bremshebel befestigt. Bremshebel und Keilelement können auch einstückig gebildet sein.

Gemäß einer bevorzugten Ausführungsform der Erfindung umfasst der Aktor einen Antrieb, wie z.B. einen Elektromotor, eine Mutter-Spindel-Einheit und eine Rolleneinheit, die durch Antrieb der Spindel in Wirkrichtung des Aktors verstellbar ist. Diese Bauform ist besonders einfach und kostengünstig zu realisieren.

Gemäß einer speziellen Ausführungsform der Erfindung ist wenigstens einer der Bremshebel, vorzugsweise beide Bremshebel, mittels eines Festkörpergelenks schwenkbar gelagert. Das Festkörpergelenk kann beispielsweise eine oder mehrere Streben aufweisen, an denen jeweils ein Bremshebel befestigt ist. Die Strebe wird dann bei einer Schwenkbewegung des Bremshebels tordiert.

Die erfindungsgemäße Reibungsbremse umfasst vorzugsweise eine Zuspanneinrichtung, insbesondere eine Federanordnung, welche die Bremshebel in Zuspannrichtung vorspannt und vorzugsweise in der Lage ist, die Bremse selbsttätig zu schließen.

Eine durch die Federanordnung angetriebene Zuspannbewegung wird vorzugsweise zumindest phasenweise vom Aktor reguliert. Auf diese Weise kann einerseits die Zuspannkraft der Federanordnung variabel eingestellt werden. Andererseits kann die Zuspannbewegung gedämpft werden. Der Aktor wird vorzugsweise derart angesteuert, dass sich der bzw. die Bremsbeläge mit einer vergleichsweise geringeren Geschwindigkeit an das Bremselement anlegen als ohne den Eingriff des Aktors. Das dadurch erzielte sanftere Anlegen der Bremsbeläge kann dazu beitragen, das Bremsverhalten der Reibungsbremse weiter zu verbessern.

Die erfindungsgemäße Reibungsbremse dient insbesondere zum Bremsen von Transporteinrichtungen jeglicher Art. Unter der Bezeichnung "Transporteinrichtung" sollen dabei sämtliche Einrichtungen verstanden werden, die entlang einer festen Bahn, wie z.B. einer Führungsschiene bewegt werden. Gemeint sind dabei insbesondere sämtliche Einrichtungen, die geeignet sind, Personen oder Güter zu transportieren, sei es horizontal oder vertikal, und insbesondere Aufzüge, Aufzugskabinen, Förderschaufeln, Förderwerke, Paternoster, Fahrkabel, Lifte, Förderregale, Hebebühnen oder Hebewerke, etc..

Der Aktor der Reibungsbremse ist vorzugsweise nicht selbsthemmend ausgeführt, so dass die Reibungsbremse im Falle eines Fehlers, wie z.B. eines Stromausfalls, selbsttätig schließen kann. Reibungsbremsen mit einem Elektromotor als Aktor und einer zusätzlichen Zuspanneinrichtung, wie z.B. der vorstehend genannten Federanordnung, arbeiten im Fehlerfall beispielsweise wie folgt: Bei einem Stromausfall kann der Elektromotor die von der Zuspanneinrichtung ausgeübte Zuspannkraft nicht mehr halten. Die Bremshebel bewegen sich dann unter der Einwirkung der Zuspanneinrichtung in die zugespannte Position. Die Transporteinrichtung wird dadurch automatisch gebremst und schließlich im Stillstand gehalten.

Gemäß einer speziellen Ausführungsform der Erfindung ist außerdem eine Auflaufbremse vorgesehen, die eine Drehbewegung des Aktors selbsttätig bremst, wenn die vom Aktor angetriebene Rolleneinheit gegen einen Anschlag läuft. Eine solche Auflaufbremse hat den Vorteil, dass die kinetische Energie des rotierenden Motors aufgenommen und außerdem verhindert werden kann, dass die Mechanik der Reibungsbremse beschädigt wird.

Die Auflaufbremse kann beispielsweise einen auf einer Spindel befestigten Belaghalter mit einem daran befestigten Bremsbelag und eine an einem Bremshebel befestigte Halterung umfassen, gegen die der Bremsbelag drückt.

Gemäß einer speziellen Ausführungsform der Erfindung umfasst die Reibungsbremse eine zwischen den Bremshebeln angeordnete Belagführung, die den Abstand der Bremsbeläge von dem dazwischen liegenden Bremselement einstellt. Die Belagführung ist vorzugsweise federnd aufgehängt, wodurch sich zwischen den gegenüberliegend angeordneten Bremsbelägen und der Führungsschiene beidseitig ein gleich großes Lüftspiel einstellt und die Bremse zentriert wird. Die Belagführung kann beispielsweise einen oder mehrere Gleitsteine umfassen, die z.B. federnd aufgehängt sein können. Im Falle einer federnden Aufhängung ist die Kennlinie der Federung im normalen Arbeitsbereich vorzugsweise steiler als diejenige der Federanordnung, mit der die Bremshebel vorgespannt sind.

Die Erfindung wird nachstehend anhand der beigefügten Zeichnungen beispielhaft näher erläutert. Es zeigen:
- Fig. 1: eine aus dem Stand der Technik bekannte Reibungsbremse mit zwei Bremshebeln;
- Fig. 2: eine andere, aus dem Stand der Technik bekannte Reibungsbremse mit zwei Bremshebeln;
- Fig. 3: eine Prinzipdarstellung einer erfindungsgemäßen Reibungsbremse;
- Fig. 4: eine seitliche, perspektivische Ansicht einer Reibungsbremse gemäß einer bevorzugten Ausführungsform der Erfindung;
- Fig. 5: eine Innenansicht der Reibungsbremse von Figur 4;
- Fig. 6: eine Aufsicht auf die in Figur 4 dargestellte Reibungsbremse von oben;
- Fig. 7: eine vergrößerte Detailansicht einer Rolleneinheit der Reibungsbremse von Fig. 4;
- Fig. 8: eine Seitenansicht der Rolleneinheit von Fig. 7;
- Fig. 9: eine vergrößerte Detailansicht einer Auflaufbremse; und
- Fig. 10: eine Detailansicht einer Belagführung.

### Ausführungsformen der Erfindung

Bezüglich der Erläuterung der Figuren 1 und 2 wird auf die Beschreibungseinleitung verwiesen.

Figur 3 zeigt eine Prinzipdarstellung einer Reibungsbremse 1 mit zwei schwenkbar gelagerten Bremshebeln 2, die in Form einer Bremszange gegenüberliegend angeordnet sind. Die Bremshebel 2 umfassen an ihrem freien Ende jeweils einen Bremsbelag 6, der bei einer Betätigung der Bremse 1 gegen ein Bremselement (nicht gezeigt), wie z. B. eine Schiene, gedrückt bzw. von diesem gelöst werden kann. Die Bremsbeläge 6 sind vorzugsweise austauschbar an den Bremshebeln 2 befestigt. An ihrem anderen Ende sind die Bremshebel 2 schwenkbar gelagert. Die zugehörigen Lager 3 sind an einem Trägerelement 4 vorgesehen, das sich zwischen den beiden Bremshebeln 2 erstreckt.

Die Reibungsbremse 1 wird von einem Aktor 5 betätigt, der in diesem Fall einen Elektromotor 18 und eine Mutter-Spindel-Einheit 7, welche als Rotations-Translations-Umsetzungsgetriebe fungiert, umfasst. Der Aktor 5 bzw. der Elektromotor 18 ist vorzugsweise an einem starren Teil der Reibungsbremse 1, wie z. B. dem Trägerelement 4 oder einem nicht zu der Bremse gehörenden Rahmenteil 13 befestigt, das zur Anbindung der gesamten Reibungsbremse 1 dient.
Über die Translationsbewegung der Mutter-Spindel-Einheit 7 wird wiederum eine in einem Schlitten 8 gelagerte Rolleneinheit 9 angetrieben. Eine Drehbewegung des Elektromotors 18 wird folglich in eine Linearbewegung der Rolleneinheit 9 umgewandelt, wobei der Schlitten 8, der über ein Gewinde bzw. Mutter an der Spindel angreift, in Richtung des Pfeiles F_{A} (in Figur 3 nach oben bzw. unten) verstellt wird.

Die Rolleneinheit 9 mit dem Schlitten 8 ist Bestandteil eines Spreizmechanismus, mit dem die vom Aktor 5 ausgeübte Kraft F_{A} genutzt wird, um die Bremshebel 2 in entgegengesetzte Richtung der Zuspannkraft F_{Z} aufzudrücken. Dabei ist der Aktor 5 samt Spreizmechanismus so angeordnet, dass sich die Wirkrichtung der Kraft des Aktors F_{A} und die Wirkrichtung der aus dem Federspeicher 11 resultierenden Zuspannkraft F_{Z} im Wesentlichen orthogonal kreuzen (im Gegensatz zu dem in Fig. 1 und 2 dokumentierten Stand der Technik, bei dem die Wirkrichtungen der Kraft des Aktors und der Zuspannkraft im Wesentlichen parallel verlaufen).

Der Spreizmechanismus 9, 26 umfasst neben der Rolleneinheit 9 wenigstens ein Keilelement 26, das im vorliegenden Beispiel an einem der Bremshebel 2 fest montiert ist. Das Keilelement 26 hat eine Keilfläche 48, an der die Rolleneinheit 9 im Betrieb der Reibungsbremse 1 abrollt. Auf der gegenüberliegenden Seite ist ein plattenförmiges Führungselement 10 vorgesehen, das wiederum fest mit dem anderen Bremshebel 2 verbunden ist. Die Fläche des Führungselements 10, an der die Rolleneinheit 9 abrollt, hat eine Flächennormale, die im Wesentlichen senkrecht zur Wirkrichtung F_{A} des Aktors 5 gerichtet ist. Das Führungselement 10 liefert somit keinen Beitrag zum Spreizen der Bremshebel, wenn die Rolleneinheit 9 vom Elektromotor 18 angetrieben wird.

Alternativ kann die Steigung des Keilelements 26 variieren, so dass sich ein nichtlineares Keilprofil ergibt.

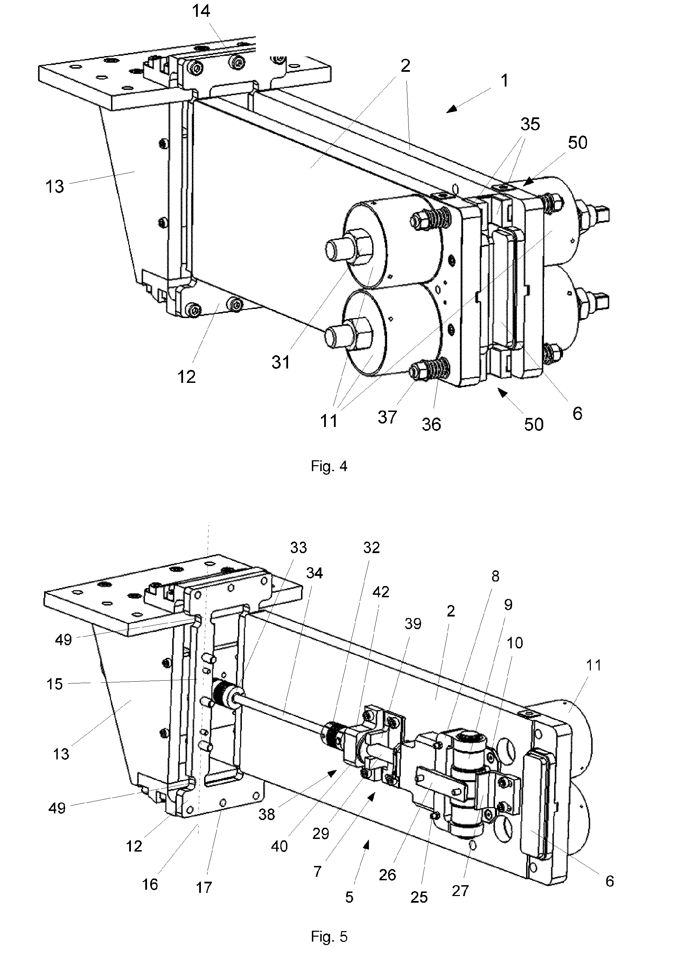

Die Reibungsbremse 1 umfasst außerdem eine in Fig. 4 näher dargestellte Zuspanneinrichtung, im vorliegenden Beispiel eine Federanordnung 11, welche die Bremshebel 2 in Zuspannrichtung vorspannt und vorzugsweise in der Lage ist, die Bremse selbsttätig zu schließen.

Die in Figur 3 dargestellte Reibungsbremse 1 arbeitet im Prinzip wie folgt: Die Bremse 1 wird von der in Figur 4 dargestellten Federanordnung 11 mit einer vorgegebenen Kraft vorgespannt. Zum Ausführen eines Bremsvorgangs wird der Schlitten 8 mittels des Aktors 5 so verstellt, dass die Rolleneinheit 9 entlang der Keilfläche 48 des Keilelements 26 abwärts (in der Fig. 3 nach oben) rollt. Dadurch verringert sich die Spreizung bzw. der Abstand zwischen den beiden Bremshebeln 2, wobei die Bremshebel 2 aufgrund der vorgespannten Federanordnung 11 zusammengedrückt werden. Die Bremsbeläge 6 bewegen sich aufeinander zu und werden an das Bremselement (nicht gezeigt) angelegt. Die von der Zuspanneinrichtung 11 angetriebene Zuspannbewegung wird dabei durch den Aktor 5 gedämpft. Um die Reibungsbremse 1 wieder zu öffnen, wird der Aktor 5 in die umgekehrte Richtung angetrieben. Dadurch rollt die Rolleneinheit 9 entlang der Keilfläche 48 nach oben (der Schlitten 8 bewegt sich in Figur 3 also nach unten), so dass die beiden Bremshebel 2 entgegen der Kraft der Federanordnung 11 auseinander gespreizt werden.

Der Spreizmechanismus könnte alternativ auch zwei Keilelemente 26 - jeweils eines pro Bremshebel 2 - aufweisen. Die Keilfläche des bzw. der Keilelemente 26 könnte auch in die entgegengesetzte Richtung ansteigen. In diesem Fall müsste der Aktor 5 in gegensinniger Weise betätigt werden.

Gemäß einer bevorzugten Ausführungsform der Erfindung sind die Zuspanneinrichtung 11 und der Aktor 5 so ausgelegt, dass die Reibungsbremse 1 bei einem Fehler, wie z.B. einem Stromausfall selbsttätig schließt. Die von der Federanordnung 11 ausgeübte Federkraft ist dabei so groß, dass der Keilmechanismus 9, 26 den Schlitten 8 in dessen Zuspannrichtung (in Fig. 3 nach oben) bewegen kann. Die Mutter-Spindel-Einheit 7 ist zu diesem Zweck nichtselbsthemmend ausgelegt.

Figur 4 zeigt eine perspektivische Seitenansicht einer Reibungsbremse 1 gemäß einer bevorzugten Ausführungsform der Erfindung. Dabei ist die Federeinheit 11, welche die Bremse mit einer hohen Kraft in Zuspannrichtung der Bremse vorspannt, gut zu erkennen. Die Federeinheit 11 umfasst hier mehrere Federpakete, die jeweils auf der Außenseite der Bremshebel 2 angeordnet sind und sich einerseits am zugehörigen Bremshebel und andererseits an einer Kontermutter 31 abstützen. Bei der in Figur 4 dargestellten Ausführungsform sind jeweils zwei Federeinheiten auf einer Gewindestange angeordnet, die sich im Wesentlichen in Zuspannrichtung (also in Richtung der Zuspannkraft F_{Z}) quer durch die Bremshebel 2 hindurch erstreckt. Die Federeinheiten 11 sind an ihrer Außenseite jeweils mit einer Mutter 31 gesichert. Die Federkraft der Federeinheiten 11 lässt sich mittels der Muttern 31 einstellen.

Figur 5 zeigt eine Innenansicht der Reibungsbremse von Figur 4, bei der insbesondere der Aktor 5 und die Rolleneinheit 9 gut zu erkennen sind, und außerdem ein Festkörpergelenk 12, mittels dessen die Bremshebel 2 schwenkbar gelagert sind.

Das Festkörpergelenk ist in diesem Fall ein verstrebtes Bauteil mit zwei Streben 15, an denen jeweils einer der Bremshebel 2 befestigt ist. Die Streben 15 sind im Prinzip als freitragende schmale Stege gebildet, die aufgrund ihres geringen Querschnittes insbesondere im Bereich der Verjüngungen 49 tordierbar sind. Das Festkörpergelenk 12 einschließlich der Streben 15 kann beispielsweise aus Metall hergestellt sein.

Wenn die Bremshebel 2 in Zuspann- bzw. Löserichtung F_{Z} geschwenkt werden, tordieren die Streben 15 um ihre Längsachse 16. Dabei baut sich eine innere Spannung im Festkörpergelenk auf, die wie eine Feder wirkt und versucht, die Bremshebel 2 wieder in ihre Ausgangslage zurück zu stellen. Das Festkörpergelenk bzw. die Streben 15 sind vorzugsweise so ausgelegt, dass sie in der geöffneten Position der Reibungsbremse 1 keine Kraft auf die Bremshebel 2 ausüben. Sie können alternativ aber auch derart ausgelegt sein, dass sie die Bremshebel 2 vorspannen, um letztere in die geöffnete Position zu bewegen. Zur Befestigung des Festkörpergelenks 12 an einem Rahmenteil 13 sind mehrere Schrauben 14 vorgesehen, die in entsprechende Gewindebohrungen 17 im Festkörpergelenk 12 eingeschraubt werden.

Für den Fachmann ist leicht ersichtlich, dass das Funktionsprinzip der Bremse auch dann noch gegeben ist, wenn lediglich einer der beiden Bremshebel schwenkbar gelagert ist. Insofern kann alternativ die Bremse mit nur einem schwenkbaren Bremshebel und einem zweiten starren Bremshebel ausgelegt werden. Vorzugsweise würde man den Bremshebel, an dem z. B. der Aktor gelagert ist, starr auslegen.

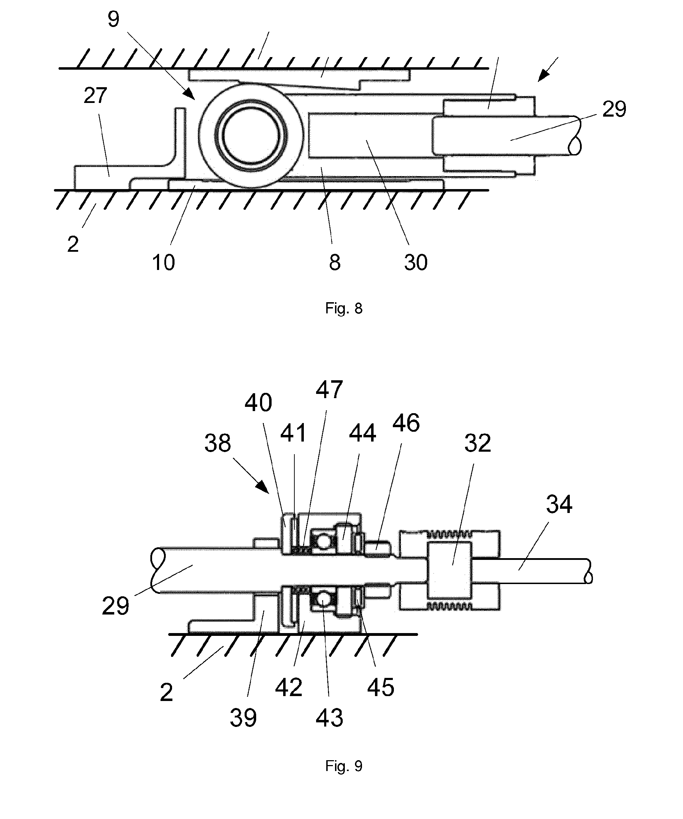

Die in Figur 5 dargestellte Mutter-Spindel-Einheit 7 umfasst im Wesentlichen eine Spindel 29 und einen Spindelfortsatz 34. Die ebenfalls zugehörige Mutter 28, mit der der Schlitten 8 in Längsrichtung der Spindel 29 verstellt werden kann, ist in Figur 8 näher dargestellt. Um eine gewisse Relativ- bzw. Ausgleichsbewegung zwischen den Elementen Elektromotor 18, Spindelfortsatz 34 und Spindel 29 zu ermöglichen, sind zwei Balgkupplungen 32 und 33 vorgesehen. Diese können die Rotationsbewegung des Elektromotors 18 übertragen und ermöglichen zugleich einen geringen axialen Versatz bzw. eine leichte Knickbewegung der Spindel 29 bzw. des Spindelfortsatzes 34, um insbesondere die Schwenkbewegungen der Bremshebel 2 ausgleichen zu können. Alternativ könnten beispielsweise auch Kardangelenke verwendet werden.

Bei einer weiteren alternativen Ausführung der Erfindung kann der Motor 18 des Aktors 5 direkt an den Bremshebel 2 montiert werden, an den auch die übrigen Lagerungen (z.B. Halter 42) des Aktors 5 befestigt werden. Dadurch könnte zumindest eine der Balgkupplungen 32 und 33 entfallen und der Aktor 5 wäre vollständig zwischen den beiden Bremshebeln 2 angeordnet.

Die Spindel 29 ist außerdem mittels eines Halters 42, der an einem der Bremshebel 2 befestigt ist, radial gelagert. Der Halter 42 und ein darin angeordnetes Radiallager 43 sind in Figur 9 im Detail dargestellt, auf die später Bezug genommen wird.

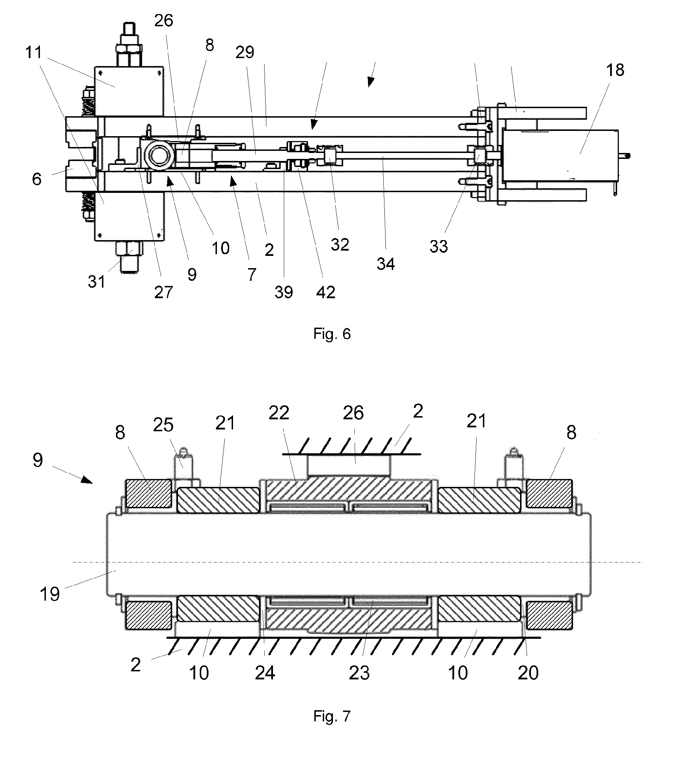

Figur 6 zeigt eine Aufsicht auf die in Figur 4 dargestellte Reibungsbremse 1 von oben. Dabei sind insbesondere die Mutter-Spindel-Einheit 7 und die Rolleneinheit 9 gut zu erkennen, die zwischen den beiden Bremshebeln 2 angeordnet sind. Wie zu sehen ist, stützt sich die Rolleneinheit 9 auf der einen Seite an der Keilfläche 26 und auf der anderen Seite am Führungselement 10 ab. Da die beim Abrollen an den gegenüberliegenden Abrollflächen der Elemente 10, 26 wirkenden Reibkräfte ein gegensinniges Moment auf die Rolleneinheit 9 ausüben, würde die Rolleneinheit 9 keine reine Rollbewegung ausführen, wenn nur eine einzige Rolle vorgesehen wäre. In diesem Fall würde die Rollbewegung von einer Gleitbewegung überlagert werden, welche den Verschleiß der Rolleneinheit 9 bzw. des Spreizmechanismus 10, 26 erhöhen würde. Um dies zu vermeiden, umfasst die Rolleneinheit 9 vorzugsweise mehrere Rollen, die so angeordnet sind, dass sie bei einer Längsverschiebung des Schlittens 8 in unterschiedliche Richtungen abrollen können.

Figur 7 zeigt eine vergrößerte Ansicht einer bevorzugten Rolleneinheit 9 mit mehreren Rollen 21, 22, die um eine gemeinsame Achse rotieren. Die Rolleneinheit 9 umfasst in diesem Fall eine mittig angeordnete Rolle 22, die auf der Keilfläche 48 des Keilelements 26 abrollt, sowie zwei Stützrollen 21, die jeweils auf einer Seite der Rolle 22 angeordnet sind und am Führungselement 10 abrollen. Die mittlere Rolle 22 ist über ein Lager 23 drehbar auf einer Welle 19 gelagert. Die beiden Stützrollen 21 sind dagegen mit der Welle 19 verbunden. Die Welle 19 ist im Schlitten 8 drehbar gelagert. Da die Rolle 22 aufgrund des Lagers 23 unabhängig zu den Stützrollen 21 rotieren kann, können die Rollen 21, 22 in entgegengesetzte Drehrichtungen entsprechend der jeweils angreifenden Drehmomente abrollen. Die Rolle 22 weist vorzugsweise ein balliges Profil auf. Alternativ können auch die Stützrollen 21 auf der Welle 19 drehbar gelagert sein.

Wie zu erkennen ist, hat die mittlere Rolle 22 einen größeren Durchmesser als die beiden Stützrollen 21. Auf der Seite der Führungselemente 10 ist im Bereich der mittleren Rolle 22 eine Ausnehmung vorgesehen, so dass die Rolle 22 nicht mit dem Bremshebel 2 in Kontakt kommt. Bei einer Bewegung der Rolleneinheit 9 in Längsrichtung der Mutter-Spindel-Einheit 7 können die Rollen 21 und 22 somit in entgegengesetzte Richtungen an ihren jeweiligen Flächen abrollen.

Um die Reibung zwischen den einzelnen Bauteilen der Rolleneinheit 9 gering zu halten, sind Gleitlager 20 bzw. 24 vorgesehen. Die Gleitlager 24 sind dabei jeweils zwischen zwei angrenzenden Rollen 21, 22 vorgesehen. Die Gleitlager 20 sind dagegen zwischen den äußeren Rollen 21 und dem Schlitten 8 angeordnet.

Bei der hier dargestellten Ausführungsform sind außerdem Federelemente 25 vorgesehen, die sich an einem Bremshebel 2 abstützen und die Rolleneinheit 9 gegen den anderen Bremshebel 2 drücken. Dadurch wird sichergestellt, dass die Rolleneinheit 9 spurgetreu entlang der Führung der Führungselemente 10 bzw. des Keilelements 26 folgt und nicht verkantet oder aus der Führung entgleitet.

Figur 8 zeigt eine seitliche Ansicht der Rolleneinheit 9 von Figur 7. Dabei sind insbesondere auch das Keilelement 26 und das Führungselement 10 im Querschnitt zu erkennen. Darüber hinaus zeigt Figur 8 den Endabschnitt der Mutter-Spindel-Einheit 7 und dessen Verbindung mit dem Schlitten 8. Im vorliegenden Fall ist die Mutter 28 in den Schlitten 8 fest eingepresst. Wie eingangs erwähnt wurde, wird die Spindel 29 vom Elektromotor 18 angetrieben. Die Drehbewegung der Spindel 29 wird dabei in eine Linearbewegung der Mutter 28 bzw. des Schlittens 8 umgewandelt. Der Schlitten 8 hat einen Hohlraum 30, in den die Spindel 29 eintauchen kann, wenn der Schlitten 8 zusammen mit der Rolleneinheit 9 die Keilfläche des Keilelementes 26 hinauf rollt (in Figur 8 bewegt sich dabei der Schlitten 8 nach rechts).

Die Reibungsbremse 1 umfasst außerdem einen Anschlag 27, der den maximalen Weg der Rolleneinheit 9 begrenzt und verhindert, dass die Rolleneinheit 9 über das Keilelement 26 bzw. das Führungselement 10 hinaus verschoben wird. Der Anschlag 27 kann beispielsweise an einem der Bremshebel 2 montiert sein.

Figur 9 zeigt schließlich noch eine Auflaufbremse 38, welche die Drehbewegung der Spindel 29 bremst, wenn sich die Mutter-Spindel-Einheit 7 in ihrer maximal ausgefahrenen Position befindet und die Rolleneinheit 9 bzw. der Schlitten 8 gegen den Anschlag 27 gelaufen ist. Sobald die Rolleneinheit 9 gegen den Anschlag 27 gestoßen ist, führt nämlich eine weitere Drehbewegung dazu, dass sich die Mutter-Spindel-Einheit 7 zwischen dem Anschlag 27 und dem Elektromotor 18 verspannt und eine zunehmende Kraft in Richtung des Antriebs 18 wirkt. In diesem Fall drückt ein Reibbelag 41, der an einem auf der Spindel 29 befestigten Belaghalter 40 montiert ist, gegen ein an einem der Bremshebel 2 fest montiertes Element, wie z.B. eine Lagerhalterung 42 mit einer in Axialrichtung weisender Reibungsfläche. Dadurch wird einerseits die Drehbewegung der Spindel gebremst und andererseits kann sich die Anpresskraft am Lagerelement 42 abstützen, wodurch der Antrieb 18 entlastet wird.

Im dargestellten Ausführungsbeispiel ist im Lagerelement 42 eine Lagerung 43, 45 integriert. Ein erstes Lager 43, nämlich ein Radiallager, ist fest am Lagerelement 42 montiert und sorgt dafür, dass sich die Spindel 29 um eine fest definierte Achse drehen kann. Das Lagerelement 42 umfasst ferner ein Axiallager 45, das sich auf der einen Seite an einem im Lagerelement 42 angeordneten Ring 44 und auf der anderen Seite an einer auf der Spindel 29 angeordneten Mutter 46 in axialer Richtung abstützt. Da das Lagerelement 42 fest mit dem Bremshebel 2 verbunden ist, kann somit die Axialkraft der Spindel 29 axial über den Bremshebel 2 abgestützt werden und überträgt sich somit nicht auf den Antrieb 18. Die kombinierte Lagerung mit einem Radiallager 43 und einem Axiallager 45 ist hier nur beispielhaft dargestellt. Anstelle dieser Anordnung können auch andere Lager(-kombinationen) eingesetzt werden, wie z.B. Schrägkugelrollenlager. Antriebseitig ist die Spindel 29 über eine Balgkupplung 32 mit einem Spindelfortsatz 34 verbunden, der die Rotationsbewegung des Motors 18 überträgt.

Die Auflaufbremse 38 umfasst außerdem ein Federelement 47, das im unbetätigten Zustand der Auflaufbremse 38 ein Lüftspiel zwischen dem Bremsbelag 41 und dem Lagerelement 42 herstellt, damit der Reibbelag 41 bei einer Rotation der Spindel 29 nicht am Lagerelement schleift.

Figur 9 zeigt außerdem einen zweiten Anschlag 39 der die Bewegung des Schlittens 8 in Richtung des Antriebs 18 begrenzt. Der Anschlag 39 ist fest mit einem der Bremshebel 2 verbunden. Gemäß einer bevorzugten Ausführungsform ist der Anschlag 39 flexibel ausgebildet, so dass der Aufprall des Schlittens 8 (bzw. der Mutter 28) abgefedert werden kann.

Im Normalbetrieb sind der Anschlag 39 und der Belaghalter 40 im geringen Abstand voneinander angeordnet. Sobald der Schlitten 8 (bzw. die Mutter 28) gegen den Anschlag 39 läuft, wird letzterer verbogen und drückt gegen den Belaghalter 40. Wenn nun die Spindel 29 weiter angetrieben wird, drückt der Schlitten 8 immer stärker gegen den Anschlag 39, wodurch die Auflaufbremse 38 zunehmend bremst und somit die Antriebsbewegung verzögert bzw. stoppt.

Gemäß einer speziellen Ausführungsform der Erfindung können der Anschlag 27 und/oder 39 als Referenzelement genutzt werden, um die Position des Schlittens 8 zu bestimmen. An wenigstens einem der Anschläge 27 bzw. 39 kann beispielsweise ein Schaltkontakt (nicht gezeigt) verbaut sein, der ein Signal erzeugt, sobald der Schlitten 8 gegen den betreffenden Anschlag 27, 39 gefahren ist. Alternativ könnte die Position des Schlittens 8 an einem der Anschläge 27, 39 auch sensorlos durch eine Strom-bzw. Leistungsmessung des Antriebs 18 erkannt werden.

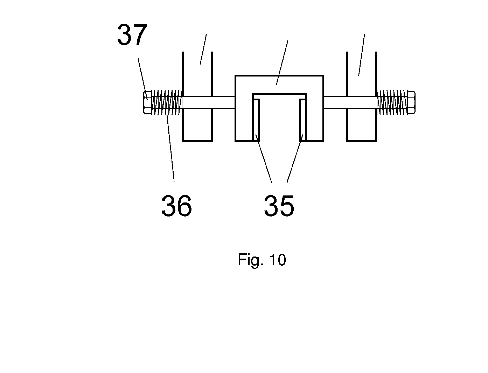

Die in den Figuren dargestellte Reibungsbremse 1 ist insbesondere zum Bremsen schienengeführter Transporteinrichtungen vorgesehen. Wenn sich die Transporteinrichtung bewegt, kann es vorkommen, dass die Bremsbeläge 6 im geöffneten Zustand der Reibungsbremse 1 gegen die dazwischen angeordnete Führungsschiene (nicht gezeigt) schlagen oder daran schleifen. Die Reibungsbremse umfasst daher vorzugsweise eine U-förmige Belagführung 50, in welcher auf beiden Schenkelseiten jeweils ein Gleitstein 35 aufgenommen ist, wie in Figur 10 dargestellt. Die U-förmige Belagführung 50 ist so ausgerichtet, dass diese die Führungsschiene bzw. das Bremselement (nicht gezeigt) umgreift. Im Ausführungsbeispiel von Figur 4 ist die Belagführung 50 zwischen den beiden Bremshebeln 2 über die Schrauben 37, welche die Bremshebel 2 durchdringen, axial verschiebbar aufgenommen, wobei die Schrauben 37 von den Federn 36, die sich am Bremshebel 2 abstützen, vorgespannt werden. Die Federn 36 haben dabei vorzugsweise eine Kraft-Weg-Kennlinie, die in Relation zu derjenigen der Federelemente 11 steiler ist. Wird nun die Transporteinrichtung und damit auch die Reibungsbremse 1 gegenüber der Führungsschiene seitlich ausgelenkt, werden die Gleitsteine 35 gegen die Führungsschiene gedrückt. Dadurch wird die Belagführung 50 gegen die entsprechenden Federn 36 gedrückt. Aufgrund der entgegengesetzt wirkenden Federkraft der Federn 36, wird die Belagführung 50 zwischen den Bremshebeln 2 wieder mittig ausgerichtet. Somit wird ein gegen die Führungsschiene schlagender oder schleifender Bremsbelag 6 von der Führungsschiene wegbewegt. D.h. zwischen Führungsschiene und den Belägen 6 stellt sich wieder ein (beidseits gleich großes) Lüftspiel ein. Auch Erschütterungen oder seitliche Schläge können mittels der Belagführung 50 federnd abgefangen werden.

Anstelle der zwei Gleitsteine 35 kann die Belagführung 50 auch mit einem einteiligen Gleitstein ausgerüstet werden, der vorzugsweise ein an die Belagführung 50 angepasstes U-Profil aufweist.

## Patentansprüche

1. Reibungsbremse (1), insbesondere für Aufzüge, umfassend wenigstens zwei Bremshebel (2), die jeweils einen Bremsbelag (6) aufweisen und in Form einer Bremszange gegenüberliegend angeordnet sind, wobei zumindest ein Bremshebel (2) schwenkbar gelagert ist, und einen Aktor (5) zum Betätigen der Bremshebel (2), der derart ausgelegt ist, dass die vom Aktor (5) ausgeübte Kraft (F_{A}) im Wesentlichen senkrecht zu einer von den Bremshebeln (5) ausgeübten Zuspannkraft (F_{Z}) wirkt und ferner ein Spreizmechanismus (9, 26) vorgesehen ist, der von dem Aktor (5) betätigt werden kann, um die Zuspannkraft (F_{Z}) zu regulieren, wobei der Spreizmechanismus (9, 26) eine vom Aktor (5) betätigte Rolleneinheit (9) mit einer ersten Rolle (21), die auf einer am ersten Bremshebel (2) vorgesehenen ersten Fläche (10) abrollt, und einer zweiten Rolle (22), die auf einer am zweiten Bremshebel (2) vorgesehenen zweiten Fläche (48) abrollt, umfasst, **dadurch gekennzeichnet, dass** die erste Rolle (21) mit einer Welle (19) fest verbunden, und die zweite Rolle (22) über ein Lager (23) drehbar auf der Welle (19) gelagert ist, und wobei sich die Rollen (21,22) um dieselbe Rotationsachse drehen.

2. Reibungsbremse (1) nach Anspruch 1, **dadurch gekennzeichnet, dass** der Aktor (5) an einem Trägerelement (4) montiert ist.

3. Reibungsbremse (1) nach Anspruch 1 oder 2, **dadurch gekennzeichnet, dass** der Aktor (5) zumindest teilweise zwischen den Bremshebeln (2) angeordnet ist.

4. Reibungsbremse (1) nach einem der vorhergehenden Ansprüche, **dadurch gekennzeichnet, dass** der Spreizmechanismus (9, 26) einen Keilmechanismus umfasst.

5. Reibungsbremse (1) nach Anspruch 4, **dadurch gekennzeichnet, dass** der Keilmechanismus (9, 26) wenigstens ein Keilelement umfasst, das an einem Bremshebel (2) befestigt ist.

6. Reibungsbremse (1) nach einem der vorhergehenden Ansprüche, **dadurch gekennzeichnet, dass** der Spreizmechanismus (9, 26) zwischen den Bremshebeln (2) angeordnet ist.

7. Reibungsbremse (1) nach einem der vorhergehenden Ansprüche, **dadurch gekennzeichnet, dass** der Aktor (5) eine Mutter-Spindel-Einheit (7) umfasst, die eine Rolleneinheit (9) in Wirkrichtung (F_{A}) des Aktors (5) antreibt.

8. Reibungsbremse (1) nach einem der vorhergehenden Ansprüche, **dadurch gekennzeichnet, dass** die Bremshebel (2) mittels eines Festkörpergelenks (12) schwenkbar gelagert sind.

9. Reibungsbremse (1) nach Anspruch 8, **dadurch gekennzeichnet, dass** das Festkörpergelenk (12) wenigstens eine Strebe (15) aufweist, die bei einer Schwenkbewegung eines Bremshebels (2) tordiert.

10. Reibungsbremse (1) nach einem der vorhergehenden Ansprüche, **dadurch gekennzeichnet, dass** eine Federanordnung (11) vorgesehen ist, welche die Bremshebel (2) in Zuspannrichtung vorspannt.

11. Reibungsbremse (1) nach Anspruch 10, **dadurch gekennzeichnet, dass** der Aktor (5) nicht selbsthemmend ausgelegt ist, so dass die Reibungsbremse (1) im Falle eines Fehlers, wie z.B. eines Stromausfalls, durch die Wirkung der Federanordnung (11) selbsttätig schließt.

12. Reibungsbremse (1) nach einem der vorhergehenden Ansprüche, **dadurch gekennzeichnet, dass** der Aktor (5) eine Auflaufbremse (38) umfasst, die eine Drehbewegung des Aktors (5) selbsttätig bremst, wenn eine vom Aktor (5) angetriebene Rolleneinheit (9) oder ein die Rolleneinheit (9) enthaltender Schlitten (8) gegen einen Anschlag (27, 39) läuft.

13. Reibungsbremse (1) nach Anspruch 12, **dadurch gekennzeichnet, dass** die Auflaufbremse (38) einen auf einer Spindel (2) befestigten Belaghalter (40) und eine an einem Bremshebel (2) befestigte Halterung (42) umfasst, gegen die ein am Belaghalter (40) befestigter Bremsbelag (41) drückt.

14. Reibungsbremse (1) nach einem der vorhergehenden Ansprüche, **dadurch gekennzeichnet, dass** zwischen den Bremshebeln (2) eine federnd aufgehängte Belagführung (50) vorgesehen ist, die sich zwischen den Bremshebeln (2) selbsttätig zentriert und dadurch einen gleich großen Abstand der beiden Bremsbeläge (6) zu einem zwischen den Bremshebeln (2) angeordneten Bremselement einstellt.

## Claims

1. Friction brake (1), in particular for lifts, comprising at least two brake levers (2), which each have a brake lining (6) and are arranged opposite each other in the form of a brake calliper, wherein at least one brake lever (2) is swivel mounted and have an actuator (5) for the actuation of the brake lever (2), which is designed in such a way that the force (F_{A}) exerted by the actuator (5) acts substantially perpendicular to a brake application force (F_{Z}) exerted by the brake levers (5) and in addition, a spreading mechanism (9, 26) is provided, which can be actuated by the actuator (5) in order to regulate the brake application force (F_{Z}), wherein
the spreading mechanism (9, 26) comprises a roller unit (9) actuated by an actuator (5) having a first coil (21) which unwinds on a first surface (10) provided on the first brake lever (2) and a second coil (22) which unwinds on a second surface (48) provided on the second brake lever (2), **characterised in that**
the first coil (21) is firmly connected to a shaft (19) and the second coil (22) is rotatably mounted on the shaft (19) by means of a bearing (23) and wherein the coils (21, 22) rotate around the same axis of rotation.

2. Friction brake (1) according to claim 1, **characterised in that** the actuator (5) is mounted on a carrier element (4).

3. Friction brake (1) according to claim 1 or 2, **characterised in that** the actuator (5) is arranged at least partially between the brake levers (2).

4. Friction brake (1) according to one of the preceding claims, **characterised in that** the spreading mechanism (9, 26) comprises a wedge mechanism.

5. Friction brake (1) according to claim 4, **characterised in that** the wedge mechanism (9, 26) comprises at least one wedge element, which is attached to a brake lever (2).

6. Friction brake (1) according to one of the preceding claims, **characterised in that** the spreading mechanism (9, 26) is arranged between the brake levers (2).

7. Friction brake (1) according to one of the preceding claims, **characterised in that** the actuator (5) comprises a nut spindle unit (7) which actuates a roller unit (9) in the operating direction (F_{A}) of the actuator (5).

8. Friction brake (1) according to one of the preceding claims, **characterised in that** the brake levers (2) are swivel mounted by means of a flexure hinge (12).

9. Friction brake (1) according to claim 8, **characterised in that** the flexure hinge (12) has at least one strut (15) which twists during a swivel movement of a brake lever (2).

10. Friction brake (1) according to one of the preceding claims, **characterised in that** a spring arrangement (11) is provided which pretensions the brake lever (2) in the brake application direction.

11. Friction brake (1) according to claim 10, **characterised in that** the actuator (5) is not designed to be self-locking, so that the friction brake (1) closes automatically in the case of a fault, for example electricity failure, by the force of the spring arrangement (11).

12. Friction brake (1) according to one of the preceding claims, **characterised in that** the actuator (5) comprises an overrun brake (38), which automatically slows down the rotational movement of the actuator (5) if a roller unit (9) driven by the actuator (5) or a carriage (8) containing the roller unit (9) runs against a stop (27, 39).

13. Friction brake (1) according to claim 12, **characterised in that** the overrun brake (38) comprises a lining mount (40) attached on a spindle (2) and a bracket (42) attached on a brake lever (2), against which a brake lining (41) attached to a lining mount (40) presses.

14. Friction brake (1) according to one of the preceding claims, **characterised in that** a spring-suspended pad guide (50) is provided between the brake levers (2), said pad guide (50) automatically centring itself between the brake levers (2) and, as a consequence, setting the distance between the two brake pads (6) to be the same size as a brake element arranged between the brake levers (2).

## Revendications

1. Frein à friction (1), notamment pour des ascenseurs, comprenant au moins deux leviers de frein (2) présentant respectivement une garniture de frein (6) et se faisant face sous la forme d'un étrier de frein, au moins un levier de frein (2) étant monté avec possibilité de pivotement, et un actionneur (5) pour actionner les leviers de frein (2), conçu de manière à ce que la force (F_{A}) exercée par l'actionneur (5) agisse essentiellement à la perpendiculaire d'un effort de serrage (F_{Z}) assuré par les leviers de frein (5) et qu'un mécanisme à expansion (9, 26) pouvant être actionné par l'actionneur (5) soit par ailleurs prévu pour réguler l'effort de serrage (F_{Z}), **dans lequel** le mécanisme d'expansion (9, 26) comprend une unité de rouleaux (9) actionnée par l'actionneur (5) avec un premier rouleau (21) se déroulant sur une première surface (10) prévue sur le premier levier de frein (2) et un deuxième rouleau (22) se déroulant sur une deuxième surface (48) prévue sur le deuxième levier de freinage (2), **caractérisé en ce que** le premier rouleau (21) est relié fixement à un arbre (19) et **en ce que** le deuxième rouleau (22) est placé en rotation sur l'arbre (19) par l'intermédiaire d'un palier (23), et dans lequel les rouleaux (21, 22) tournent autour du même axe de rotation.

2. Frein à friction (1) selon la revendication 1, **caractérisé en ce que** l'actionneur (5) est monté sur un élément porteur (4).

3. Frein à friction (1) selon la revendication 1 ou 2, **caractérisé en ce que** l'actionneur (5) est disposé au moins partiellement entre les leviers de frein (2).

4. Frein à friction (1) selon l'une quelconque des revendications précédentes, **caractérisé en ce que** le mécanisme à expansion (9, 26) présente un mécanisme à clavette.

5. Frein à friction (1) selon la revendication 4, **caractérisé en ce que** le mécanisme à clavette (9, 26) comprend au moins un élément à clavette fixé sur un levier de frein (2).

6. Frein à friction (1) selon l'une quelconque des revendications précédentes, **caractérisé en ce que** le mécanisme à expansion (9, 26) est disposé entre les leviers de frein (2).

7. Frein à friction (1) selon l'une quelconque des revendications précédentes, **caractérisé en ce que** l'actionneur (5) comprend une unité écrou/broche (7) qui entraîne une unité de rouleaux (9) dans la direction d'action (F_{A}) de l'actionneur (5).

8. Frein à friction (1) selon l'une quelconque des revendications précédentes, **caractérisé en ce que** les leviers de frein (2) sont montés avec pivotement possible à l'aide d'une articulation à corps solide (12).

9. Frein à friction (1) selon la revendication 8, **caractérisé en ce que** l'articulation à corps solide (12) présente au moins un montant (15) qui se tord en cas de mouvement de pivotement d'un levier de frein (2).

10. Frein à friction (1) selon l'une quelconque des revendications précédentes, **caractérisé en ce qu'**il est prévu un dispositif à ressorts (11) exerçant une précontrainte sur le levier de frein (2) dans la direction d'application.

11. Frein à friction (1) selon la revendication 10, **caractérisé en ce que** l'actionneur (5) n'est pas autobloquant de sorte qu'en cas d'erreur, par exemple de coupure de courant, le frein à friction (1) se serre automatiquement par l'action du dispositif à ressorts (11).

12. Frein à friction (1) selon l'une quelconque des revendications précédentes, **caractérisé en ce que** l'actionneur (5) comprend un frein à inertie (38) qui freine automatiquement un mouvement de rotation de l'actionneur (5) lorsqu'une unité de rouleaux (9) entraînée par l'actionneur (5) ou un chariot (8) contenant l'unité de rouleaux (9) rencontre une butée (27, 39).

13. Frein à friction (1) selon la revendication 12, **caractérisé en ce que** le frein à inertie (38) comprend un support de garniture (40) fixé sur une broche (2) et un support (42) fixé à un levier de frein (2) et comprimé par une garniture de frein (41) fixée à un support de garniture (40).

14. Frein à friction (1) selon l'une quelconque des revendications précédentes, **caractérisé en ce qu'**il est prévu entre les leviers de frein (2) un guide de garniture (50) suspendu de manière élastique, se centrant automatiquement entre les leviers de frein (2) et réglant ainsi une distance entre les deux garnitures de frein (6) identique à la largeur de l'élément de frein disposé entre les leviers de frein (2).
